# EUROPEAN PATENT SPECIFICATION

(11) **EP 3 009 279 B1**
(45) Date of publication and mention of the grant of the patent: **26.07.2017**
(21) Application number: 15189323.7
(22) Date of filing: 12.10.2015
(51) Int. Cl.: B60C 17/00, B60C 13/04, B60C 9/00

(54) **PNEUMATIC TIRE**
LUFTREIFEN
PNEUMATIQUE

(30) Priority: 14.10.2014 JP 2014210136
(43) Date of publication of application: 20.04.2016
(73) Proprietor: Sumitomo Rubber Industries, Ltd., Hyogo-ken (JP)
(72) Inventor: KAJITA, Hiroaki, Kobe-shi, Hyogo 651-0072 (JP)
(74) Representative: Manitz Finsterwald Patentanwälte PartmbB

(56) References cited:
- EP-A2- 0 719 662
- DE-A1-102005 050 675
- US-A1- 2006 060 284
- US-A1- 2010 084 071

## Description

### Background of the Invention

The present invention relates to a pneumatic tire provided with a sidewall reinforcing FRP layer in order to improve rolling resistance performance and durability performance. DE 10 2005 050 675 A discloses a pneumatic tire according to the preamble of claim 1. For example, in the Japanese Patent Application Publication No. 2009-126410, there is disclosed a run-flat tire provided in each sidewall portion with a crescent-shaped sidewall reinforcing rubber layer made of thick rubber to enable the driver to continue driving even if the tire on the vehicle is punctured.

Such run-flat tire, however, has a tendency that, during traveling under normally inflated conditions, the rolling resistance and ride comfort are deteriorated due to the thick sidewall portions, and the fuel consumption and dynamic performance of the vehicle is deteriorated due to the increased tire weight.

### Summary of the Invention

It is therefore, a primary object of the present invention to provide a pneumatic tire which can be improved in the rolling resistance performance during traveling under normally inflated conditions and the durability performance during run-flat traveling under punctured conditions.

According to the present invention, a pneumatic tire comprises a tread portion, a pair of sidewall portions, a pair of bead portions with a bead core therein, and a carcass extending between the bead portions through the tread portion and the sidewall portions, and the pneumatic tire is characterized by a sidewall reinforcing FRP layer made of fiber reinforced plastic and disposed in at least one of the sidewall portions.

Preferably, the sidewall reinforcing FRP layer is disposed on the axially inside of the carcass.

Preferably, the fiber reinforced plastic has a tensile strength of not less than 5.5 GPa, and a tensile modulus of elasticity of 260 to 320 GPa.

Preferably, the tread portion is provided with a belt disposed radially outside the carcass, and the axial distance between an axially outer edge of the belt and the radially outer edge of the sidewall reinforcing FRP layer is not more than 5 mm.

Preferably, the radial distance between the radially inner edge of the sidewall reinforcing FRP layer and the radially outer end of the bead core is not more than 5 mm.

Preferably, the radially outer edge of the sidewall reinforcing FRP layer is positioned axially outside an axially outer edge of the belt, and the radially inner edge of the sidewall reinforcing FRP layer is positioned radially outside the radially outer end of the bead core.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list.

For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like. In case of passenger car tires, however, the standard pressure and standard tire load are uniformly defined by 180 kPa and 88 % of the maximum tire load, respectively.

The tread edges Te are the axial outermost edges of the ground contacting patch of the tire which occurs under the normally inflated loaded condition when the camber angle of the tire is zero.

The tread width TW is the width measured under the normally inflated unloaded condition, as the axial distance between the tread edges Te determined as above.

The tire section width SW means the axial distance between the outsides of the sidewall portions of the tire measured at the maximum tire section width position M under the normally inflated unloaded condition, excluding elevations due to labeling (marking), decoration or protective bands or ribs. Incidentally, the maximum tire section width position M is occurred at the substantially same radial height as the maximum section width position m of the carcass 6.

### Brief Description of the Drawings

Fig. 1 is a cross sectional view of a pneumatic tire as an embodiment of the present invention.
Fig. 2 is a cross sectional view of the sidewall portion and the bead portion thereof.

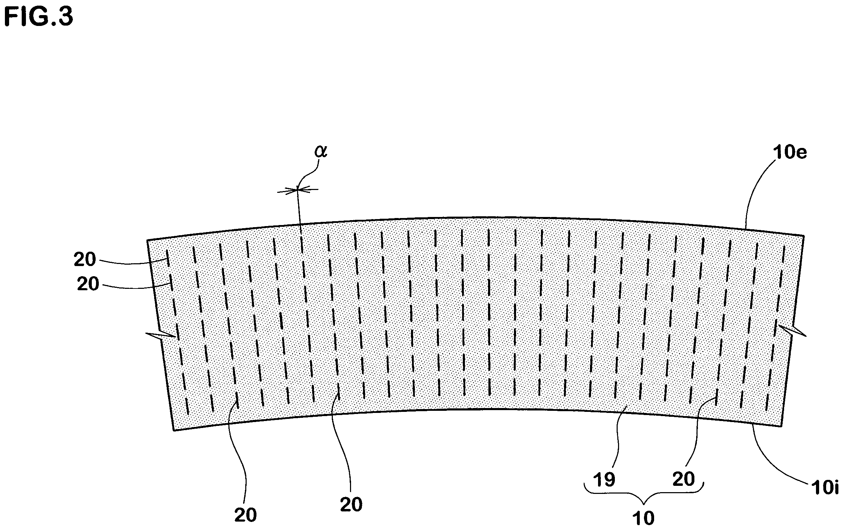

Fig. 3 is a side view of a part of the sidewall reinforcing FRP layer thereof.
Fig. 4 is a perspective view of another example of the sidewall reinforcing FRP layer.

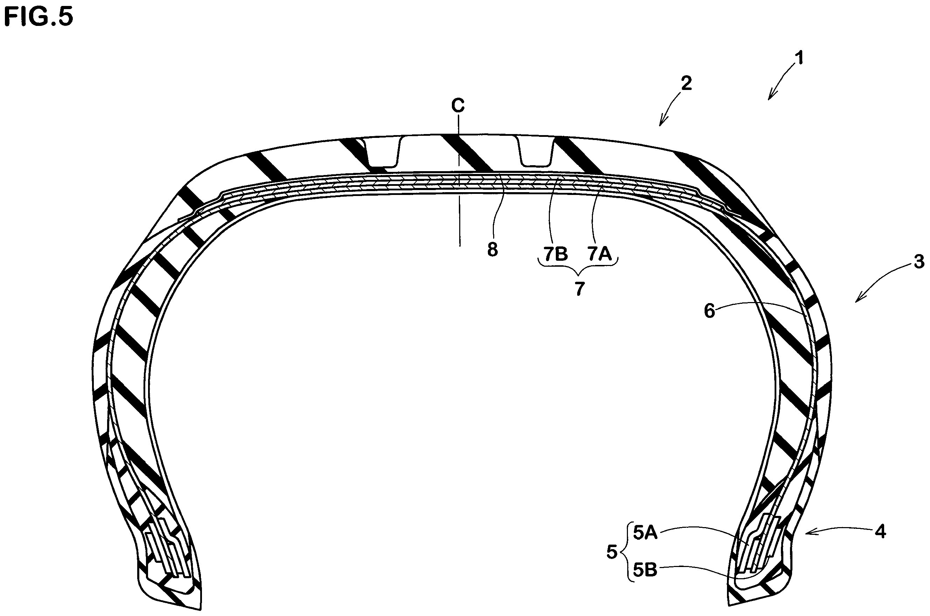

Fig. 5 is a cross sectional view of a pneumatic tire as a comparative example tire.

### Description of the Preferred Embodiments

Embodiments of the present invention will now be described in detail in conjunction with the accompanying drawings.

The following embodiments are intended to reduce the air resistance of the tire during high speed traveling by making the tire as being slim, namely, by making the tire section width as being relatively small for the tire diameter.
On such premise, the present invention is intended to improve the durability performance during run-flat traveling under punctured conditions, and the rolling resistance performance during traveling under normally inflated conditions, without using the conventional crescent-shaped thick sidewall reinforcing rubber layer. Therefore, in the following embodiments, the pneumatic tire 1 according to the present invention is a passenger car tire having a section width SW of 115 to 165 mm and an aspect ratio of 0.6 to 0.7, and designed to be mounted on a rim having a rim diameter of 457,2 to 508 mm (18 to 20 inches). If the tire section width SW is more than 165 mm, it becomes difficult to reduce the air resistance. If the tire section width SW is less than 115 mm, it becomes difficult to secure the durability, strength, good ride comfort and the like. If the rim diameter is less than 457,2 mm (18 inches) there is a possibility that the deformation of the belt 7 is increased and the rolling resistance performance is deteriorated. If the wheel rim diameter is more than 508 mm (20 inches), there is a possibility that the weight of the wheel rim increases, and the fuel consumption is deteriorated. If the aspect ratio is less than 0.6, there is a possibility that the tire weight is increased, and the fuel consumption is deteriorated. If the aspect ratio is more than 0.7, there is a possibility that stiffness of the sidewall portion 3 is decreased, and the durability performance is deteriorated.

In the drawings, the pneumatic tire 1 according to the present invention comprises: a tread portion 2, a pair of axially spaced bead portions 4, a pair of sidewall portions 3 extending therebetween, a carcass 6 extending between the bead portions 4 through the tread portion 2 and the sidewall portions 3, a tread reinforcing cord layer disposed in the tread portion, and a sidewall reinforcing FRP layer 10.

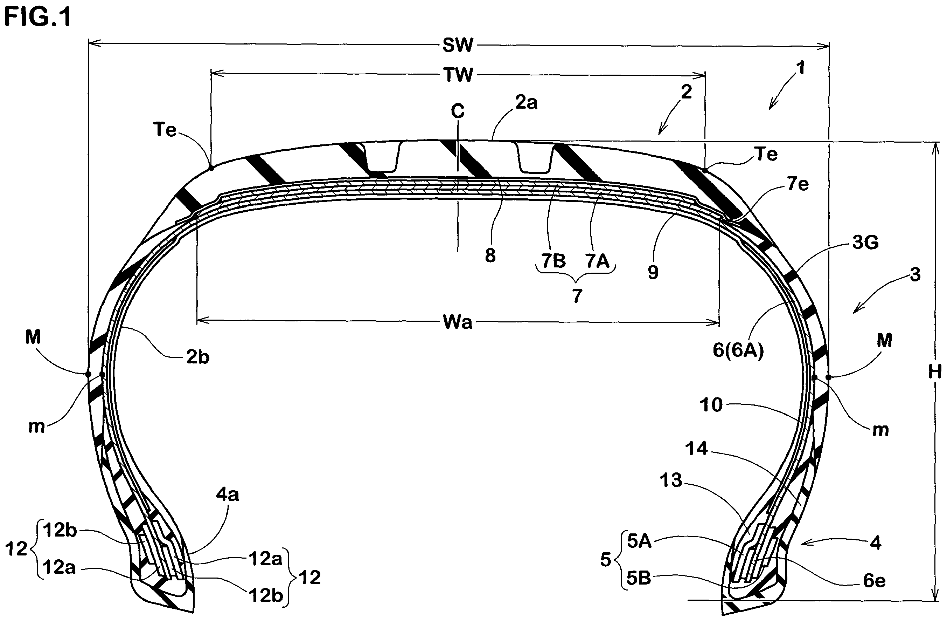

The carcass 6 is composed of at least one ply 6A of cords arranged radially at an angle in a range of from 75 to 90 degrees with respect to the tire equator C and extending between the bead portions 4 through the tread portion 2 and the sidewall portions 3 to be secured to bead cores 5 in the bead portions 4. In the embodiment shown in Fig. 1, the carcass 6 is composed of a single ply 6A of cords arranged radially at substantially 90 degrees with respect to the tire equator C.
In order to reduce the tire weight, the carcass ply 6A is terminated in each bead portion 4 without the ply edge 6e being turned up around the bead core 5.
In the present invention, however, the carcass ply 6A is not limited to such design. For example, the carcass ply 6A may be turned up around the bead core 5 in each bead portion 4 from the axial inside to the axially outside.

As to the cords of the ply 6A, organic fiber cords are preferably used.

In this embodiment, aramid fiber cords are used to reduce the tire weight.
In the case of the aramid carcass cords, it is preferable that the cord count of the ply 6A is 40 to 60 per 5cm ply width, the cord structure of each cord is 600 to 1400 dtex/2, the twist number of each cord is 50 to 70 turns per 10cm in order to effectively improve the durability performance of the tire while reducing the tire weight.

Aside from the aramid fiber cord, other organic fiber cords such as polyester, rayon and nylon can be used as the carcass cords.

In this embodiment, the tread reinforcing cord layer include a belt 7 and a band 8.

The belt 7 is disposed radially outside the carcass 6 and composed of two or more plies, in this embodiment two cross plies 7A and 7B each made of high modulus cords for example steel cord and the like laid at an angle of 15 to 40 degrees with respect to the tire equator C.

In this embodiment, the radially inner ply 7A disposed on the radially outside of the carcass 6 is the widest belt ply. Preferably, the axial width Wa of the radially inner belt ply 7A is set in a range of from 90 % to 110 % of the tread width TW so that the edges 7e of the radially inner belt ply 7A are positioned near the tread edges Te to exert the hoop effect over the almost entire tread width.

The band 8 is disposed on the radially outside of the belt 7, and composed of at least one ply, in this embodiment only one ply 8A of a cord wound spirally at an angle of not more than 5 degrees with respect to the tire circumferential direction.
In this embodiment, the band ply 8A extends continuously over the entire width of the belt 7.
However, the band 8 may be a pair of edge bands separated in the tire axial direction to cover only the respective edge portions of the belt 7.
As to the band cords, organic fiber cords are suitably used.
In this embodiment, aramid fiber cords are used. Aside from the aramid fiber cord, other organic fiber cords such as polyester, rayon and nylon can be used as the band cord. In the case of the aramid band cord, it is preferable that
the cord count of the band ply 8A is 40 to 60 per 5cm ply width, the cord structure of each cord is 600 to 1400 dtex/2, and the twist number of each cord is 50 to 70 turns per 10cm.

An inner liner rubber 9 made of air impermeable rubber, e.g. butyl rubber, halogenated butyl rubber and the like, is disposed along the inside of the carcass 6 so as to define the inner surface 2b of the tire.

In this embodiment, the bead core 5 disposed in each bead portion 4 is composed of an axially inside part 5A disposed on the axially inside of the carcass 6, and an axially outside part 5B disposed on the axially outside of the carcass 6. The axially inside part 5A is made of a plurality of windings 12a of an inextensible bead wire (not shown) which is overlap wound circumferentially of the tire.
The axially outside part 5B is made of a plurality of windings 12b of an inextensible bead wire (not shown) which is overlap wound circumferentially of the tire.
Between the axially inside part 5A and the axially outside part 5B, the edge 6e of the carcass ply 6A is sandwiched and secured.

Further, each bead portion 4 is provided with a bead core tightening rubber 13, and a clinch rubber 14.

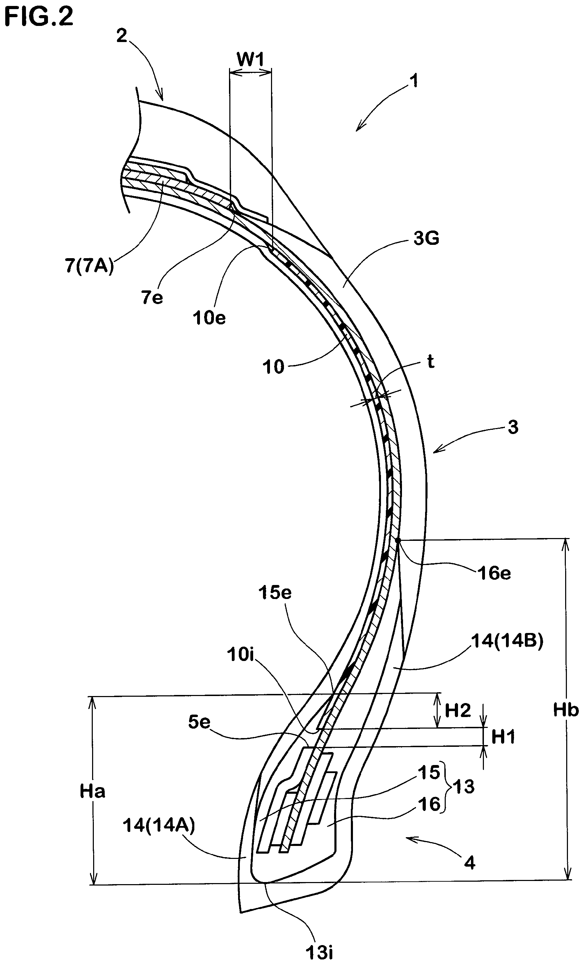

As shown in Fig. 2, the bead core tightening rubber 13 is composed of
a base part disposed radially inside the bead core 5, an axially outside part 16 extending radially outwardly from the base part along the axially outside of the bead core 5 and the axially outside of the carcass 6, and
an axially inside part 15 extending radially outwardly from the base part along the axially inside of the bead core 5 and the axially inside of the carcass 6.
The radial height Ha of the axially inside part 15 is preferably less than 1.0 times, more preferably not more than 0.70 times, but preferably not less than 0.40 times the radial height Hb of the axially outside part 16.
Therefore, the region from a sidewall lower portion to the bead portion is effectively reinforced, while reducing the weight of the bead core tightening rubber 13 in the axially inside part 15. Thereby, both of the rolling resistance performance and the durability performance can be improved.

The radial height Ha of the axially inside part 15 is preferably set in a range of not less than 10 % and not more than 35 % of the tire section height H in view of the tire weight reduction and the rigidity of the bead portion 4.

It is preferable that the complex elastic modulus E* of the bead core tightening rubber 13 is set in a range of from about 30 MPa to about 100 MPa in order that the bead core tightening rubber 13 can deform flexibly to prevent it from being separated from the carcass 6 while securing necessary bending rigidity.

It is preferable that the loss tangent (tanδ) of the bead core tightening rubber 13 is about 0.10 to 0.25 in order to improve the rolling resistance performance and the durability performance in good balance.

In this specification, the complex elastic modulus E* and the loss tangent (tanδ) are measured according to the Japanese Industrial Standards JIS K6394 by the use of a viscoelastic spectrometer under the following conditions.

| | |
|---|---|
| initial strain: | 10 % |
| amplitude: | +/- 2 % |
| frequency : | 10 Hz |
| deformation mode: | tensile |
| temperature: | 70 degrees C |

The clinch rubber 14 is made of hard rubber to prevent abrasion of the bead portion caused by the wheel rim. The clinch rubber 14 is disposed along the bottom surface, the axially inner surface and the axially outer surface of the bead portion 4 and the axially outer surface of a sidewall lower portion, and the clinch rubber 14 covers the bead core tightening rubber 13.
The clinch rubber 14 has an axially inside part 14A disposed on the axially inside of the axially inside part 15, and an axially outside part 14B disposed on the axially outside of the axially outside part 16 and extending radially outwardly therealong.
The axially inside part 14A is terminated at a position radially inside the radially outer end 5e of the bead core 5 in order to reduce the tire weight.

Each of the sidewall portions 3 is provided with the sidewall reinforcing FRP layer 10 and a sidewall rubber 3G.

The sidewall rubber 3G is disposed on the axially outside of the carcass 6 to define the tire outer surface in the sidewall portion 3.

The sidewall reinforcing FRP layer 10 is disposed on the axially inside of the carcass 6 and on the axially outside of the inner liner rubber 9 in order to increase the rigidity of the sidewall portion 3 and thereby to improve the durability performance during run-flat traveling.

The sidewall reinforcing FRP layer 10 is a seat of a fiber reinforced plastic.
The fiber reinforced plastic has a specific gravity and a thickness which are smaller than those of the conventional sidewall reinforcing rubber layer, and thereby it is possible to reduce the tire weight in comparison with the conventional run-flat tire.
In order to effectively increase the rigidity in the tire radial direction of the sidewall portion 3, it is preferred that the radially outer edge 10e of the sidewall reinforcing FRP layer 10 is disposed near the axially outer edge 7e of the belt 7 (in this embodiment, the axially outer edge of the radially inner widest belt ply 7A), and
the radially inner edge 10i of the sidewall reinforcing FRP layer 10 is disposed near the radially outer end 5e of the bead core 5.
More specifically, the axial distance w1 between the radially outer edge 10e of the sidewall reinforcing FRP layer 10 and the axially outer edge 7e of the belt 7 is preferably set in a range of not more than 5 mm, and
the radial distance H1 between the radially inner edge 10i of the sidewall reinforcing FRP layer 10 and the radially outer end 5e of the bead core 5 is preferably set in a range of not more than 5 mm.
It is preferable that the radially outer edge 10e of the sidewall reinforcing FRP layer 10 is disposed axially outside the axially outer edge 7e of the belt 7 without overlap in order not to excessively increase the rigidity of the tread portion 2 and not to increase the tire weight, and thereby not to deteriorate the ride comfort and the rolling resistance performance.
It is preferable that the radially inner edge 10i of the sidewall reinforcing FRP layer 10 is disposed radially outside the radially outer end 5e of the bead core 5 without overlap in order not to excessively increase the rigidity of the bead portion 4 and not to increase the tire weight.
It is preferable that the sidewall reinforcing FRP layer 10 contacts with the axially inside part 15 of the bead core 5. In this embodiment, the radially inner edge 10i of the sidewall reinforcing FRP layer 10 is secured between the carcass 6 and the axially inside part 15 of the bead core 5.
Thereby, the rigidity in the vicinity of the radially outer edge of the axially inside part 15 of the bead core 5 is increased, and the run-flat durability performance can be further improved. The overlap H2 in the tire radial direction between the sidewall reinforcing FRP layer 10 and the axially inside part 15 of the bead core 5 is preferably not less than 10 % of the radial height Ha of the axially inside part 15 of the bead core 5, and preferably not more than 30 % of the radial height Ha not to increase the tire weight.

During run-flat traveling, the sidewall reinforcing FRP layer 10 is subjected to large compressive stress in the tire radial direction, therefore, the fiber reinforced plastic has to have high compressive strength to achieve good run-flat durability performance.

It is desirable that a most part (for example, at least 80 % in mass) of the reinforcement fibers 20 in the sidewall reinforcing FRP layer 10 are orientated radially of the tire at an angle α of at most 15 degrees with respect to the tire radial direction in order to effectively increase the rigidity of the sidewall portion 3 in the tire radial direction so as to reduce the deflection of the tire during run-flat traveling, and improve the run-flat durability performance.

The fiber reinforced plastic of the sidewall reinforcing FRP layer 10 is composed of a plastic material (resin matrix) 19 and reinforcement fibers 20.

As to the plastic material (resin matrix) 19, thermosetting resins (e.g. polyester, epoxy, phenol, polyimid and the like) and thermoplastic resins (e.g. polyamide, polypropylene, polybutylene terephthalate and the like) can be used.
From a standpoint of the strength, production efficiency, material cost and the like, it is preferable to use at least one kind of resin selected from a group consisting of epoxy, polyester, polyethylene, and vinylester.

As to the reinforcement fibers 20, inorganic fibers (e.g. glass fiber, boron fiber, graphite and the like) and organic fibers (e.g. wholly aromatic polyamide fiber, wholly aromatic polyester fiber, ultrahigh molecular weight polyethylene fiber, high strength vinylon fiber, high strength acrylic fiber and the like) can be used.
From a standpoint of the strength, production efficiency, material and the like, it is desirable to use carbon fibers which preferably have a tensile modulus of elasticity of 50 to 1000 GPa, more preferably 100 to 800 GPa when measured according to JIS R7601: "Testing methods for carbon fibers".

If the content of the reinforcement fibers 20 in the fiber reinforced plastic is low, the rigidity of the sidewall portion 3 can not be increased. If the content is high, the sidewall reinforcing FRP layer 10 becomes liable to separate from the carcass 6 and the inner liner rubber 9, and becomes liable to crack, therefore, the run-flat durability performance is deteriorated. From these standpoints, it is desirable that the fiber reinforced plastic comprises, with respect to 100 parts by mass of the plastic component, not less than 25 parts by mass, preferably not less than 30 parts by mass, but not more than 40 parts by mass, preferably not more than 35 parts by mass of the reinforcement fibers 20.

In order to reduce the thickness of the sidewall portion 3 and thereby to make the tire as being slim in comparison with the conventional run-flat tire (to reduce the air resistance), the thickness t of the sidewall reinforcing FRP layer 10 in this embodiment is set in a range of from 1.0 to 1.5 mm for example.

Further, in this embodiment, the sidewall reinforcing FRP layer 10 has a substantially constant thickness. However, the sidewall reinforcing FRP layer 10 is not limited to such design.

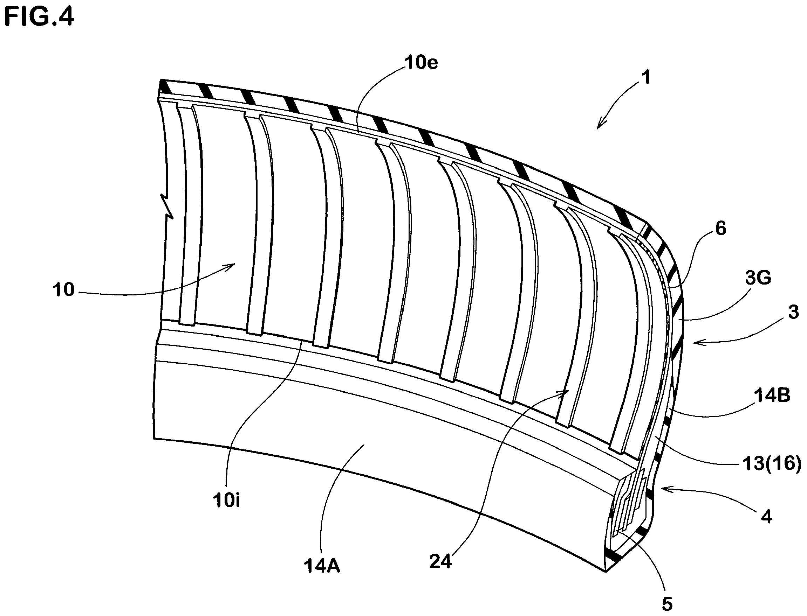

In Fig. 4, another example of the sidewall reinforcing FRP layer 10 is shown, wherein the inner liner rubber 9 is not shown. In this example, on the inside of the sidewall reinforcing FRP layer 10, radially extending ribs 24 are arranged at intervals in the tire circumferential direction. The thickness of the sidewall reinforcing FRP layer 10 is increased in the ribbed portions (24) than the other portions therebetween having the above-mentioned thickness t in a range of from 1.0 to 1.5 mm. Such sidewall reinforcing FRP layer 10 can further increase the rigidity of the sidewall portion 3 to improve the run-flat durability performance.

In any case, either a constant thickness or a variable thickness, the sidewall reinforcing FRP layer 10 can be formed, for example, by applying tapes of the fiber reinforced plastic directly or indirectly onto a rigid metal core (not shown) having a profile corresponding to the profile of the inner surface of the tire.
For example, the width of the tape is 3 to 9 mm, and the thickness of the tape is 0.09 to 0.1 mm.
The reinforcement fibers 20 in the tape are orientated in the longitudinal direction of the tape.
The length of each tape corresponds to the length between the radially outer edge 10e and the radially inner edge 10i of the sidewall reinforcing FRP layer 10 measured in the tire radial direction along the sidewall reinforcing FRP layer 10. The tapes are applied so as to overlap in the tire circumferential direction with no space therebetween, and so as to overlap one another up to the predetermined thickness, and so that the reinforcement fibers become substantially parallel with the tire radial direction.

In order to manufacture a raw tire, in addition to the sidewall reinforcing FRP layer 10, other tire components are applied onto the rigid metal core. Then, the raw tire is vulcanized, and the fiber reinforced plastic is hardened. Thus, the sidewall reinforcing FRP layer 10 exerts its reinforcing effect.
For that purpose, the fiber reinforced plastic preferably has a tensile modulus of elasticity of 260 to 320 GPa. If the tensile modulus of elasticity T is lower than 260 GPa, it is difficult increase the rigidity in the tire radial direction of the sidewall portion 3, and the run-flat durability performance can not be improved. If the tensile modulus of elasticity is more than 320 GPa, the rigidity in the tire radial direction of the sidewall portion 3 is excessively increased, and the ride comfort is deteriorated.
Further, it is preferable that the fiber reinforced plastic has a tensile strength of 5.5 to 6.5 GPa.
Here, the tensile modulus of elasticity and the tensile strength are measured according to the now-defunct Japanese Industrial Standards JIS K7113 "Test Method for Tensile Properties of Plastics".

### Comparison Tests

Based on the structure shown in Fig. 1, pneumatic tires of size 155/65R19 having specifications listed in Table 1 were experimentally manufactured and tested for the rolling resistance performance, run-flat durability performance, and ride comfort.

### < Rolling resistance test >

using a 1.7 meter dia. tire test drum, each test tire inflated to 230 kPa was measured for the rolling resistance under a tire load of 4.8 kN at a speed of 80 km/h. The result as the reciprocal of the rolling resistance is indicated in Table 1 by an index based on Comparative example tire Ref. being 100, wherein the larger value is better.

### < Run-flat durability performance test >

Using the above-mentioned tire test drum, each test tire deflated completely by removing the valve insert of the rim was run under the tire load of 4.53 kN at a speed of 80 km/h until failure occurred while measuring the running distance, up to 110 % of the running distance of Comparative example tire Ref.. The result is indicated in Table 1 by an index based on the running distance of Comparative example tire Ref. being 100.

### < Ride comfort test >

A test car (2000 cc Japanese passenger car) provided on all four wheels with the same kind of test tires inflated to 230 kPa was run on a rough road surface in a tire test course and the test driver evaluated the ride comfort.
The results are indicated in Table 1 by an index based on Comparative example tire Ref. being 100, wherein the larger index number is better.

### < Tire weight >

The reciprocal of the tire weight is indicated by an index based on Comparative example tire Ref. being 100. The larger the index number, the lighter the tire weight.

**Table 1**

| Tire | Ref. | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|---|---|---|---|---|---|---|---|
| tire internal structure (Fig.No.) | 5 | 1 | 1 | 1 | 1 | 1 | 1 | 1 | 1 | 1 | 1 | 1 | 1 | 1 | 1 | 1 | 1 | 1 |
| sidewall reinforcing FRP layer | | | | | | | | | | | | | | | | | | |
| tensile modulus of elasticity (GPa) | -- | 290 | 240 | 260 | 320 | 340 | 290 | 290 | 290 | 290 | 290 | 290 | 290 | 290 | 290 | 290 | 290 | 290 |
| tensile strength (GPa) | -- | 5.6 | 5.6 | 5.6 | 5.6 | 5.6 | 5.3 | 6.5 | 5.6 | 5.6 | 5.6 | 5.6 | 5.6 | 5.6 | 5.6 | 5.6 | 5.6 | 5.6 |
| bead core tightening rubber | | | | | | | | | | | | | | | | | | |
| complex elastic modulus (MPa) | 55 | 55 | 55 | 55 | 55 | 55 | 55 | 55 | 55 | 55 | 55 | 55 | 55 | 55 | 55 | 55 | 55 | 55 |
| loss tangent | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| axial distance W1 (mm) | 0 | 0 | 0 | 0 | 0 | 0 | 0 | 0 | 5 | 7 | -5 | 0 | 0 | 0 | 0 | 0 | 0 | 0 |
| radial distance H1 (mm) | 0 | 0 | 0 | 0 | 0 | 0 | 0 | 0 | 0 | 0 | 0 | 5 | 7 | -5 | 0 | 0 | 0 | 0 |
| overlap H2/Ha(%) | 20 | 20 | 20 | 20 | 20 | 20 | 20 | 20 | 20 | 20 | 20 | 20 | 20 | 20 | 5 | 10 | 30 | 40 |
| tire weight | 100 | 108 | 108 | 108 | 108 | 108 | 108 | 108 | 109 | 110 | 105 | 109 | 110 | 105 | 109 | 109 | 107 | 106 |
| rolling resistance | 100 | 110 | 110 | 110 | 110 | 110 | 110 | 110 | 111 | 112 | 108 | 111 | 112 | 108 | 112 | 111 | 109 | 108 |
| run-flat durability | 100 | 100 | 98 | 99 | 101 | 101 | 98 | 101 | 98 | 96 | 102 | 98 | 96 | 102 | 97 | 98 | 101 | 103 |
| ride comfort | 100 | 110 | 112 | 111 | 109 | 108 | 111 | 109 | 110 | 111 | 107 | 110 | 111 | 107 | 111 | 111 | 110 | 109 |

| | | | | | | | | | | | | | | | | | | |
|---|---|---|---|---|---|---|---|---|---|---|---|---|---|---|---|---|---|---|
| W1: plus (+) values mean the sidewall reinforcing FRP layer was not overlapped with the belt minus (-) values mean the sidewall reinforcing FRP layer was overlapped with the belt H1: plus (+) values mean the sidewall reinforcing FRP layer was not overlapped with the bead core minus (-) values mean the sidewall reinforcing FRP layer was overlapped with the bead core | | | | | | | | | | | | | | | | | | |

## Claims

1. A pneumatic tire (1) comprising a tread portion (2), a pair of sidewall portions (3), a pair of bead portions (4) with a bead core (5) therein, and a carcass (6)extending between the bead portions (4) through the tread portion (2) and the sidewall portions (3), and **characterized by** a sidewall reinforcing FRP layer (10) made of fiber reinforced plastic and disposed in at least one of the sidewall portions (3).

2. The pneumatic tire according to claim 1, wherein the sidewall reinforcing FRP layer (10) is disposed on the axially inside of the carcass (6).

3. The pneumatic tire according to claim 1 or 2, wherein the fiber reinforced plastic has a tensile strength of not less than 5.5 GPa, and a tensile modulus of elasticity of 260 to 320 GPa.

4. The pneumatic tire according to any one of claims 1-3, wherein the tread portion (2) is provided with a belt (7) disposed radially outside the carcass (6), and
the axial distance (w1) between an axially outer edge (7e) of the belt (7) and the radially outer edge (10e) of the sidewall reinforcing FRP layer (10) is not more than 5 mm.

5. The pneumatic tire according to any one of claims 1-4, wherein the radial distance (H1) between the radially inner edge (10i) of the sidewall reinforcing FRP layer (10) and the radially outer end (5e) of the bead core (5) is not more than 5 mm.

6. The pneumatic tire according to claim 5, wherein the tread portion (2) is provided with a belt (7) disposed radially outside the carcass (6),
the radially outer edge (10e) of the sidewall reinforcing FRP layer (10) is positioned axially outside an axially outer edge (7e) of the belt (7), and
the radially inner edge (10i) of the sidewall reinforcing FRP layer (10) is positioned radially outside the radially outer end (5e) of the bead core (5).

## Patentansprüche

1. Luftreifen (1), umfassend einen Laufflächenabschnitt (2), ein Paar Seitenwandabschnitte (3), ein Paar Wulstabschnitte (4) mit einem Wulstkern (5) darin, und eine Karkasse (6), die sich zwischen den Wulstabschnitten (4) durch den Laufflächenabschnitt (2) und die Seitenwandabschnitte (3) erstreckt, und **gekennzeichnet durch** eine Seitenwandverstärkungs-FRP-Schicht (10), die aus faserverstärktem Kunststoff hergestellt und in zumindest einem der Seitenwandabschnitte (3) angeordnet ist.

2. Luftreifen nach Anspruch 1, wobei die Seitenwandverstärkungs-FRP-Schicht (10) auf der axialen Innenseite der Karkasse (6) angeordnet ist.

3. Luftreifen nach Anspruch 1 oder 2, wobei der faserverstärkte Kunststoff eine Zugfestigkeit von nicht weniger als 5,5 GPa und einen Zugelastizitätsmodul von 260 bis 320 GPa aufweist.

4. Luftreifen nach einem der Ansprüche 1 bis 3, wobei der Laufflächenabschnitt (2) mit einem Gürtel (7) versehen ist, der radial außerhalb der Karkasse (6) angeordnet ist, und
der axiale Abstand (W1) zwischen einer axial äußeren Kante (7e) des Gürtels (7) und der radial äußeren Kante (10e) der Seitenwandverstärkungs-FRP-Schicht (10) nicht größer als 5 mm ist.

5. Luftreifen nach einem der Ansprüche 1 bis 4, wobei der radiale Abstand (H1) zwischen der radial inneren Kante (10i) der Seitenwandverstärkungs-FRP-Schicht (10) und dem radial äußeren Ende (5e) des Wulstkerns (5) nicht größer als 5 mm ist.

6. Luftreifen nach Anspruch 5, wobei der Laufflächenabschnitt (2) mit einem Gürtel (7) versehen ist, der radial außerhalb der Karkasse (6) angeordnet ist,
die radial äußere Kante (10e) der Seitenwandverstärkungs-FRP-Schicht (10) axial außerhalb einer axial äußeren Kante (7e) des Gürtels (7) angeordnet ist, und
die radial innere Kante (10i) der Seitenwandverstärkungs-FRP-Schicht (10) radial außerhalb des radial äußeren Endes (5e) des Wulstkerns (5) angeordnet ist.

## Revendications

1. Bandage pneumatique (1) comprenant une portion formant bande de roulement (2), une paire de portions de parois latérales (3), une paire de portions de talons (4) avec une âme de talon (5) à l'intérieur, et une carcasse (6) s'étendant entre les portions de talons (4) en traversant la portion formant bande de roulement (2) et les portions de parois latérales (3), et **caractérisé par** une couche FRP de renforcement de paroi latérale (10) faite de matière plastique renforcée par des fibres et disposée dans l'une au moins des portions de parois latérales (3).

2. Bandage pneumatique selon la revendication 1, dans lequel la couche FRP de renforcement de paroi latérale (10) est disposée axialement à l'intérieur de la carcasse (6).

3. Bandage pneumatique selon la revendication 1 ou 2, dans lequel la matière plastique renforcée par des fibres a une résistance à la traction qui n'est pas inférieure à 5,5 GPa, et un module d'élasticité en traction de 260 à 320 GPa.

4. Bandage pneumatique selon l'une quelconque des revendications 1 à 3, dans lequel la portion formant bande de roulement (2) est dotée d'une ceinture (7) disposée radialement à l'extérieur de la carcasse (6), et
la distance axiale (W1) entre une bordure axialement extérieure (7e) de la ceinture (7) et la bordure radialement extérieure (10e) de la couche FRP de renforcement de paroi latérale (10) ne dépasse pas 5 mm.

5. Bandage pneumatique selon l'une quelconque des revendications 1 à 4, dans lequel la distance radiale (H1) entre la bordure radialement intérieure (10i) de la couche FRP de renforcement de paroi latérale (10) et l'extrémité radialement extérieure (5e) de l'âme de talon (5) ne dépasse pas 5 mm.

6. Bandage pneumatique selon la revendication 5, dans lequel la portion formant bande de roulement (2) est dotée d'une ceinture (7) disposée radialement à l'extérieur de la carcasse (6),
la bordure radialement extérieure (10e) de la couche FRP de renforcement de paroi latérale (10) est positionnée axialement à l'extérieur d'une bordure axialement extérieure (7e) de la ceinture (7), et
la bordure radialement intérieure (10i) de la couche FRP de renforcement de paroi latérale (10) est positionnée radialement à l'extérieur de l'extrémité radialement extérieure (5e) de l'âme de talon (5).
